(19) Europäisches Patentamt
European Patent Office
Office européen des brevets

(11) **EP 4 140 729 B1**

(12) **EUROPEAN PATENT SPECIFICATION**

(45) Date of publication and mention
of the grant of the patent:
**01.05.2024 Bulletin 2024/18**

(21) Application number: **21193302.3**

(22) Date of filing: **26.08.2021**

(51) International Patent Classification (IPC):
***B32B 5/18*** (2006.01)     ***B32B 7/12*** (2006.01)
***B32B 27/08*** (2006.01)     ***B32B 27/18*** (2006.01)
***B32B 27/20*** (2006.01)     ***B32B 27/36*** (2006.01)
***H01Q 1/00*** (2006.01)     ***B32B 3/12*** (2006.01)

(52) Cooperative Patent Classification (CPC):
**B32B 3/12; B32B 7/12; B32B 27/08; B32B 27/18;
B32B 27/20; B32B 27/365; H01Q 1/422;**
B32B 2250/03; B32B 2250/244; B32B 2250/246;
B32B 2307/20; B32B 2307/212; B32B 2307/50;
B32B 2457/00

(54) **A MULTILAYER COMPOSITE SHEET FOR ANTENNA HOUSING**

MEHRSCHICHTIGE VERBUNDFOLIE FÜR EIN ANTENNENGEHÄUSE

FEUILLE COMPOSITE MULTICOUCHE POUR BOÎTIER D'ANTENNE

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(43) Date of publication of application:
**01.03.2023 Bulletin 2023/09**

(73) Proprietor: **Covestro Deutschland AG**
**51373 Leverkusen (DE)**

(72) Inventors:
• **XIONG, Lingling**
**201907 Shanghai (CN)**
• **MENG, Jiru**
**201200 Shanghai (CN)**
• **HING, Ke**
**201313 Shanghai (CN)**

(74) Representative: **Levpat**
**c/o Covestro AG**
**Gebäude K12**
**51365 Leverkusen (DE)**

(56) References cited:
**WO-A1-2019/068004     CH-A1- 714 293**
**CN-A- 112 318 950**

**Description**

**Technical Field**

The present invention belongs to the field of polymer composite. Specifically, the present invention relates to a multilayer composite sheet for antenna housing, a preparation method therefor, and an antenna housing made from the same.

**Background Art**

The 5G technology is the coming fifth generation wireless mobile communication technology. 5G wireless networks will support 1,000-fold gains in capacity, connections for at least 100 billion devices, and a 10 Gb/s individual user experience capable of extremely low latency and response times. 5G is the backbones for Artificial Intelligence (AI), Internet of Things (IOT), automation, connected cars, Remote healthcare, smart city, etc. The deployment of these networks will emerge between 2020 and 2030.

5G can cover a broad range of waves, including middle band lower than 6 GHz, and millimeter wave higher than 24 GHz. Due to the high attenuation of higher frequency electromagnetic waves when they encounter obstacles during transmission, high signal transmission would be one of the key requirements for the antenna protective materials to be used for 5G technology.

Better signal transmission performance means that the dielectric constant Dk and the loss factor Df of the material are low and stable under a wide range of frequencies and environmental conditions. If the antenna housing has a multilayer structure, S11 (return loss) and S21 (gain) are commonly used indicators to characterize the transmission performance of the antenna, and its unit is dB. In the real applications, S11 should be less than -10 dB or even less than -20 dB.

Traditional antenna housings having a solid structure are made of plastic resins by injection molding or extrusion molding, wherein Dk and Df are dependent on the material itself, generally higher Dk and Df would lead to higher signal loss.

Because of longer wavelength being used in 4G, even if there is signal loss, the influence is quite limited, thus, products having the solid structure made by standard injection molding or extrusion molding can basically fulfill actual application requirement.

However, for 5G with mmWave (millimeter wave, above 24GHz), higher signal transmission performance is required due to the challenge of signal attenuation. In actual application, basic properties of polycarbonate need to be maintained to certain degree and signal loss need to be reduced. Meanwhile, because of the integration of RRU (remote radio unit) with AAU (active antenna unit), the weight of the final antenna part has been increased, which also requires for weight reduction of the antenna housing.

There are some patent documents related to multilayer composite sheets comprising a foaming layer.

US6492015B1 discloses a composite sheet comprising a foamed polycarbonate resin first layer and a non-foamed polycarbonate resin-containing second layer. Two layers are laminated by coextrusion or by extruding the second layer onto the first layer. The foamed polycarbonate resin layer has a thickness of 0.5-15 mm, the non-foamed polycarbonate resin layer has a thickness of 0.05-0.1 mm.

CN111421937A discloses a sandwich composite sheet with a core layer and two skin layers for 5G millimeter wave antenna housing. The two skin layers are made from thermoplastic resins or fiber reinforced thermoplastic composite materials and the core layer is a thermoplastic foamed material. However, the signal transmittance of the sandwich composite are not high as desired.

Therefore, there is still a need in 5G millimeter wave related applications for antenna housings that have improved signal transmission performance and reduced weight.

WO 2019/068004 A1 disclosurs a layered structure for a radome for use with radiation of a free space frequency. The present disclosure relates more particularly to a layer structure for a radome having a core with an inside surface and an exposed outside surface. The core includes a first core layer having a first relative permittivity of at least 2.3 and a second core layer having a second relative permittivity of at least 2.3. The first core layer is no more than 0.75 mm from the outside surface of the core. An inner structure is disposed on the inside surface of the core and has at least one layer. Each of the first relative permittivity and second relative permittivity is at least 0.4 greater (e.g., at least 0.7 greater, at least I greater, or at least 1.3 greater) than a relative permittivity of any layer in the inner structure.

CH 714 293 A1 discloses a honeycomb structure obtained by a 3D printing process comprises cells juxtaposed, each cell having the shape of a hexagonal prism having six side faces. The structure comprises, distributed in the honeycomb structure, a series of openings in the side faces of the different cells.

CN 112 318 950 A discloses a high-strength electromagnetic pulse protection structural material which comprises an electromagnetic protection layer and covering layers covering the upper surface and the lower surface of the electromagnetic protection layer, wherein the electromagnetic protection layer is obtained by overlapping a plurality of layers of lattice structure electromagnetic protection layers, each layer of lattice structure electromagnetic protection layer is composed of a lattice structure material obtained by distributing structural units with tip protrusions in a honeycomb lattice manner and an electromagnetic absorption loss coating coated on the lattice structure material, the mass percentage content of the electromagnetic absorption loss coating in each layer of lattice structure electromagnetic protection layer is gradually increased from top to bottom and is distributed in a gradient manner, and the inner gap of the electromagnetic protection layer is filled with a light high-wave-transmission resin-based reinforcing material.

**Summary of the Invention**

An object of the present invention is to provide an antenna housing for, preferably for 5G millimeter wave, which has improved signal transmission performance and reduced weight.

According to a first aspect of the present invention, provided is a multilayer composite sheet for an antenna housing, comprising, in order:

a first non-foamed skin layer 1;
a first adhesive layer 2;
a core layer with a honeycomb structure 3;
a second adhesive layer 4; and
a second non-foamed skin layer 5;
wherein,
the first and second non-foamed skin layers 1, 5 are made from a first polycarbonate composition comprising polycarbonate and an optional component selected from impact modifiers, flame retardants, UV absorbers, and fillers,
the core layer 3 is made from a second polycarbonate composition comprising polycarbonate and an optional component selected from impact modifiers and flame retardants,
the core layer 3 has a thickness in a range of 0.8-10 mm, each of the first and second non-foamed skin layers 1, 5 has a thickness in a range of 0.1-1.0 mm, the total thickness of the multilayer polycarbonate composite sheet is in a range of 1.6-11 mm, the thickness ratio of the core layer 3 to the multilayer polycarbonate composite sheet is in a range of 0.2-0.95,
the density of the core layer 3 is in the range of 0.1-0.5 g/cm$^3$, the average density of the multilayer polycarbonate composite sheet is in the range of 0.18-0.95 g/cm$^3$,
the multilayer composite sheet has signal transmittance of more than 96% and S11 of less than -20 dB, according to electromagnetic simulation based on plane wave at mmWave frequencies.

According to a second aspect of the present invention, provided is a method for preparing the multilayer composite sheet according to the present invention by thermoforming or adhesive bonding.

According to a third aspect of the present invention, provided is an antenna housing comprising the multilayer composite sheet according to the present invention.

The inventors found that the multilayer composite sheet according to the present invention can achieve improved signal transmission performance.

Meanwhile, since the core layer 3 is hollowed with a honeycomb structure, the multilayer composite sheet according to the present invention has a reduced weight, as compared with a solid sheet with the same size.

In some embodiments, the multilayer composite sheet according to the present invention can pass the falling dart impact test according to ISO 6603-1: 1985 at room temperature ( 23 °C).

The multilayer composite sheet according to the present invention can be used as outdoor or indoor antenna housing, or portable electrical/electronic device housing, which requires good signal transmission performance and lightweight.

**Brief Description of Drawings**

The present invention is explained in more details below with reference to the accompanying drawings, wherein:

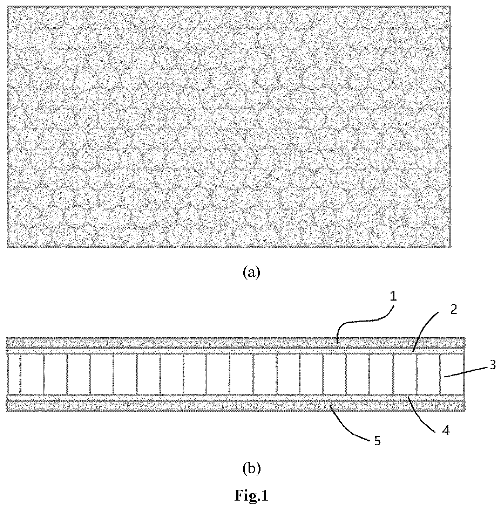

Fig. 1 schematically shows the front view (a) and the cross-section view (b) of a multilayer composite sheet according to an embodiment of the present invention, wherein 1 indicates a first non-foamed skin layer, 2 indicates a first adhesive layer, 3 indicates a core layer with a honeycomb structure, 4 indicates a second adhesive layer, and 5 indicates a second non-foamed skin layer.

**Detailed description of the Invention**

Some specific embodiments of the invention will now be described with reference to the drawings for purposes of illustration and not limitation.

The descriptions of the various features in this application can be combined with each other when there is no contradiction, and all fall within the protection scope as claimed in the attached claims.

In that which follows and unless otherwise indicated, the limits of a range of values are included within this range, in particular in the expressions "between... and... " and "from ... to ...".

Unless defined otherwise, all technical and scientific terms used herein have the same meaning as commonly understood by one of ordinary skill in the art to which this invention belongs. When the definitions of the terms in this specification conflict with the meanings commonly understood by those skilled in the art to which the present invention pertains, the definitions described herein shall prevail.

Throughout the instant application, the term "comprising" is to be interpreted as encompassing all specifically mentioned features as well optional, additional, unspecified ones. As used herein, the use of the term "comprising" also discloses the embodiment wherein no features other than the specifically mentioned features are present (*i.e.* "consisting of').

Unless otherwise specified, all numerical values expressing thickness, density, and the like which are used in the description and claims are to be understood as being modified by the term "about".

In some embodiments, the multilayer composite sheet consists of a first non-foamed skin layer 1; a first adhesive layer 2; a core layer with a honeycomb structure 3 ; a second adhesive layer 4; and a second non-foamed skin layer 5.

**Non-foamed skin layers 1, 5**

The multilayer composite sheet according to the present invention comprises a first non-foamed skin layer 1 and a second non-foamed skin layer 5.

The first and second non-foamed skin layers 1, 5 are independently from each other and made from a first polycarbonate composition comprising polycarbonate and an optional component selected from impact modifiers, flame retardants, UV absorbers, and fillers.

Any polycarbonate well known in the art can be used in the skin layers 1, 5.

The skilled in the art can select the types and amounts of impact modifiers, flame retardants, UV stabilizers, and fillers as needed.

For example, the impact modifier may be one or more selected from the following: butadiene rubber or styrene-butadiene rubber based and methyl methacrylate-styrene grafted impact modifiers having a core-shell structure (MBS), siloxane-acrylate rubbers having a core-shell structure, acrylate rubber-based core-shell impact modifiers, and the like.

Preferably, the butadiene rubber or styrene-butadiene rubber based core-shell impact modifiers are butadiene rubber or styrene-butadiene rubber based impact modifiers grafted with methyl methacrylate or methyl methacrylate-styrene copolymers, e.g. Kane Ace M732 available from Kaneka, and Paraloid™ EXL2650J, EXL2690 and EXL2691J available from Dow Chemicals, and the like.

Preferred siloxane-acrylate rubbers suitable to be used are, for example, Metablen S-2100, S-2001, S-2006 and the like available from Mitsubishi Rayon, and Kane Ace MR-01 from Kaneka Corporation.

It is preferred that the acrylate rubber-based core-shell impact modifiers are acrylate rubber-based impact modifiers grafted with methyl methacrylate, including Paraloid™ EXL2311, EXL2313, EXL2315, EXL2300, EXL2330 and EXL2390 available from Dow Chemicals; and Durastrength® 410, 440 and 480 available from Arkema.

The above-mentioned impact modifiers can be used alone or in combination.

Preferably, if presents, the impact modifier is present in an mount ranging from 1.0 wt% to 8.0 wt% and more preferably from 1.0 wt% to 6.0 wt%, most preferably from 2.0 wt% to 5.0 wt%, based on the weight of the first polycarbonate composition.

The flame retardant may be a flame retardant commonly used in the field of polycarbonate materials, such as organic phosphorus-based flame retardants, such as bisphenol A bis (diphenyl phosphate) (BDP), triphenyl phosphate (TPP), phosphazene, and resorcinol bis (diphenyl phosphate) (RDP).

The above-mentioned flame retardants can be used alone or in combination.

Preferably, if presents, the flame retardant is present in an amount ranging from 1.0 wt% to 5.0 wt%, and more preferably from 1.5 wt% to 3.0 wt%, based on the weight of the first polycarbonate composition.

The UV stabilizer may be an UV stabilizer commonly used in the field of polycarbonate materials.

Suitable UV stabilizers are described, for example, in EP 1 308 084 A1, DE 102007011069 A1, and DE 10311063 A1.

Particularly suitable UV stabilizers are hydroxybenzotriazoles such as 2-(3',5'-bis(1,1-dimethylbenzyl)-2'-hydroxyphenyl) benzotriazole (Tinuvin® 234, BASF SE, Ludwigshafen), 2-(2'-hydroxy-5'-(tert-octyl)phenyl)benzotriazole (Tinuvin® 329, BASF SE, Ludwigshafen), 2-(2'-hydroxy-3'-(2-butyl)-5'-(tert-butyl)phenyl)benzotriazole (Tinuvin® 350, BASF SE, Ludwigshafen), bis(3-(2H-benzotriazolyl)-2-hy-droxy-5-tert-octyl)methane (Tinuvin® 360, BASF SE, Ludwigshafen), 2- (4,6-diphenyl-1,3,5 -triazin-2 -yl)-5 - (hexyloxy)phenol (Tinuvin® 1577, BASF SE, Ludwigshafen), and also the benzophenones 2,4-dihydroxybenzophenone (Chimasorb® 22, BASF SE, Ludwigshafen) and 2-hydroxy-4-(octyloxy)benzophenone (Chimasorb® 81, BASF SE, Ludwigshafen), 2-propenoic acid, 2-cyano-3,3-biphenyl, 2,2-bis [[(2-cyano -1 -oxo-3,3 -diphenyl-2-propenyl)oxy] methyl]-1,3-propanediyl ester (9CI) (Uvinul® 3030, BASF SE, Ludwigshafen), 242-hydroxy-4-(2-ethylhexyl)oxy]phe-ny1-4,6-di(4-phenyl)pheny1-1,3,5-triazine (Tinuvin® 1600, BASF SE, Ludwigshafen) or tetraethyl 2,2'-(1,4-phe-nylenedimethylidene)bismalonate (Hostavin® B-Cap, Clariant AG). Mixtures of these UV stabilizers can also be used.

Preferably, if presents, the UV stabilizer is preferably present in an amount ranging from 0.10 wt% to 1.00 wt% and more preferably from 0.10 wt% to 0.50 wt%, particularly preferred from 0.10 wt% to 0.30 wt%, based on the weight of the first polycarbonate composition.

The filler may be that commonly used in the field of polycarbonate materials.

Examples of fillers are mica, talc, calcium carbonate, dolomite, wollastonite, barium Sulfate, silica, kaolin, feldspar, barytes, or the like.

The fillers may have an average particle size ($d_{50}$ value) of 0.1 to 20 micrometers, specifically 0.5 to 10 micrometers, and more specifically 1 to 3 micrometers. The average particle size (d50 value) of the fillers can be determined by means of ultracentrifuge measurement (W. Scholtan, H. Lange, Kolloid, Z. und Z. Polymere 250 (1972), 782-1796) .

Preferably, if presents, the filler is present in amounts of 1-7 wt. %, preferably 2-6 wt. %, more preferably 2-5 wt. %, based on the total weight of the first polycarbonate composition.

The first skin layer 1 and the second skin layer 5, independently from each other, have a thickness in a range of 0.1-1.0 mm.

The skin layers 1, 5 can provide a protection to the multilayer composite sheet due to their UV resistance, anti-aging, and humidity resistance properties.

### Core layer with a honeycomb structure 3

The multilayer composite sheet according to the present invention comprises a core layer with a honeycomb structure 3.

The core layer 3 is made from a second polycarbonate composition comprising polycarbonate and an optional component selected from impact modifiers and flame retardants,

Any polycarbonate well known in the art can be used in the core layer 3.

The impact modifiers and the flame retardants can be the same as defined previously.

Preferably, if presents, the impact modifier is present in an mount ranging from 1.0 wt% to 8.0 wt% and more preferably from 1.0 wt% to 6.0 wt%, most preferably from 2.0 wt% to 5.0 wt%, based on the weight of the first polycarbonate composition.

Preferably, if presents, the flame retardant is present in an amount ranging from 1.0 wt% to 5.0 wt%, and more preferably from 1.5 wt% to 3.0 wt%, based on the weight of the first polycarbonate composition.

The core layer 3 has a honeycomb structure.

Fig. 1 schematically shows the front view (a) and the cross-section view (b) of a multilayer composite sheet according to an embodiment of the present invention, wherein the multilayer composite sheet comprises a first non-foamed skin layer 1, a first adhesive layer 2, a core layer with a honeycomb structure 3, a second adhesive layer 4, and a second non-foamed skin layer 5.

The core layer 3 has a thickness in a range of 0.8-10 mm.

The thickness ratio of the core layer 3 to the multilayer composite sheet is in a range of 0.2-0.95, preferably 0.25-0.95, more preferably 0.4-0.95.

Preferably, the density of the core layer 3 is in the range of 0.13-0.5 g/cm$^3$.

The lightweight and reduced signal loss can be achieved through the honeycomb cells in the core layer 3.

The core layer 3 has a lower density resulting in weight reduction, has lower Dk and Df, and can provide good signal transmission performance and certain mechanical support.

### Adhesive layers 2, 4

The multilayer composite sheet according to the present invention comprises a first adhesive layer 2 and a second adhesive layer 4 to bond the non-foamed skin layers 1, 2 to the core layer 3.

Preferably, the thickness of each of the adhesive layers 2, 4 is in a range from 0.025 to 0.1 mm.

The adhesive layers 2, 4 can be formed by any adhesive suitable for bonding polycarbonate layers.

For example, the first and second adhesive layers 2, 4, independently from each other, are formed by two-component cyanoacrylate/epoxy hybrid adhesive, two-component acrylic adhesive, two-component polyurethane adhesive, reactive polyurethane adhesive, or hot-melt thermoplastic polyurethane adhesive.

Examples of the commercially available two-component cyanoacrylate /epoxy hybrid adhesives include products with the trade name LOCTITE® HY 4090™ by Henkel (China) Co., Ltd.

Example of the commercially available two-component acrylic adhesives include products sold under the trade name LOCTITE® AA H3500™ and LOCTITE® AA H8000™ by Henkel (China) Co., Ltd.

Example of the commercially available two-component polyurethane adhesive include products sold under the trade name LOCTITE® HHD 6305 by Henkel (China) Co., Ltd.

Example of the commercially available reactive polyurethane adhesive films include products with the trade name Bayfol® LR-V 5902 from Covestro Polymers (China) Co., Ltd.

Examples of the commercially available hot-melt thermoplastic polyurethane (TPU) adhesive films include products sold under the trade name Platilon® HU2105 or Platilon® ID5051 from Covestro Polymers (China) Co., Ltd.

For the purpose of the present invention, preferably, the multilayer composite sheet is symmetrical in structure and has a total thickness in the range of 1.6-10.55 mm and the average density in the range of 0.186-0.912 g/cm$^3$, and the thickness ratio of the core layer 3 to the multilayer composite sheet is in a range of 0.267-0.947.

## Preparation of multilayer composite sheet

According to the second aspect of the present invention, provided is a method for preparing the multilayer composite sheet according to the present invention by thermoforming or adhesive bonding.

The skin layers 1, 2 can be available from the market or manufactured on-site with the first polycarbonate composition.

If there is any optional component(s), the first polycarbonate composition and the second polycarbonate composition can be obtained by first mixing polycarbonate pellets with the optional component, and then melting and extruding the mixture obtained in a screw extruder.

The skin layers 1, 2 can be formed by injection molding, injection-compression molding, extrusion molding, blowing molding or thermoforming the first polycarbonate composition.

The skilled in the art can determine the processing parameters for injection molding, injection-compression molding, extrusion molding, blowing molding or thermoforming the first polycarbonate composition based on the materials used.

The core layer 3 can be available from the market or manufactured on-site with the second polycarbonate composition.

As mentioned previously, the core layer 3 has a honeycomb structure.

The core layer 3 can be formed by extruding polycarbonate melt from a die plate with multiple cylindrical holes which are arrayed in a certain principle to obtain a big honeycomb block with multiple tubes connected together, the outer diameter of a tube is called the cell diameter, and the tube thickness is called the cell thickness; then cutting the big block from the direction perpendicular to the tube length to get a sheet with honeycomb structure to the desired sheet thickness.

The desired weight reduction can be achieved by changing the die plate with adjusted cell diameter and cell thickness.

In some embodiments, the multilayer composite sheet is prepared by thermoforming.

In particular, in some embodiments, the method for preparing the multilayer composite sheet comprises the following steps:

i) providing the first and second non-foamed skin layers 1, 5, the core layer 3, and the first and second adhesive layers 2, 4;
ii) stacking in order the first non-foamed skin layer 1, the first adhesive layer 2, the core layer 3, the second adhesive layer 4, and the second non-foamed skin layer 5; and
iii) laminating the stacked layers by thermoforming and cooling to obtain the multilayer composite sheet.

In some embodiments, the multilayer composite sheet is prepared by adhesive bonding.

In particular, in some embodiments, the method for preparing the multilayer composite sheet comprises the following steps:

i) providing the first non-foamed skin layer 1, the core layer 3, and the second non-foamed skin layer 5;
ii) applying a first adhesive on one surface of the first non-foamed skin layer 1 and a second adhesive on one surface of the second non-foamed skin 5 to form the first adhesive layer 2 and the second adhesive layer 4, respectively;
iii) stacking the first non-foamed skin layer 1, the core layer 3, and the second non-foamed skin layer 5 in order with the first adhesive layer 2 and the second adhesive layer 4 facing one surface of the core layer 3, respectively, and iv) applying a load on the top of the stacked layers while curing the adhesive at room temperature to form the multilayer composite sheet.

The skilled in the art can select the parameters used in the process of preparation.

## Antenna housing comprising the multilayer composite sheet

According to a third aspect of the present invention, provided is an antenna housing comprising the multilayer composite sheet according to the present invention.

The multilayer composite article can be designed into desired 3-dimensional shape with appropriate size, so as to be used in many applications including antenna housings. When used as an antenna housing, the antenna housing may be provided with a shape of a rectangular parallelepiped, cube, semi-ellipsoid, semi-sphere, etc.

The non-foamed skin layers 1, 2 of the multilayer composite sheet according to the present invention can meet various appearance requirements, for example, high gloss, different colors, and different decorative patterns can be realized on the skin layer.

In addition, at least one of the non-foamed skin layers 1, 2 can provide waterproof, ultraviolet resistance, weather resistance, impact resistance, flame resistance and other properties according to the application needs. It can be used outdoors or indoors to meet relevant performance requirements.

Compared with the existing non-foamed polycarbonate sheet with the same thickness, the multilayer composite sheet of the present invention can achieve improved signal transmission performance and lightweight by a combination of a core layer with a honeycomb structure 3 and non-foamed skin layers 1, 2.

The signal loss during the transmission of electromagnetic waves in the medium is affected by many factors. For the housing as the transmission medium, in addition to the thickness and the distance from the housing to the antenna, the dielectric constant Dk and loss factor Df of the material are two particularly critical factors. Dk is a macro-physical quantity indicating the degree of polarization of a medium, and the capacity of the medium to store electric energy, thereby characterizing the ability to hinder signal transmission. Df is a physical quantity indicating the capability of the dielectric causing signal loss. The higher Dk, the higher Df, which indicates that the capability of the medium blocking signal transmission is stronger, and the more signal transmission loss is. For 5G signals, especially millimeter waves, Dk and Df of the antenna housing material need to be reduced to lower the signal loss. If the antenna housing has a two-layer or multilayer structure, S11 (return loss) and S21 (gain) are commonly used indicators to characterize the transmission performance of the antenna as mentioned previously, and its unit is dB.

Compared with the existing polycarbonate sheet with the same thickness, the multilayer composite sheet according to the present invention has relatively low return loss (S 1 1) and gain loss (S21).

The antenna housing according to the present invention can be used as a protective housing for large outdoor antennas, small indoor antennas, and antennas of portable electrical and electronic equipment.

Particularly, the antenna housing according to the present invention can be used as a 5G antenna housing.

The antenna housing according to the present invention can protect the 5G antenna from the sun, the rain and snow, the hail and wind after being installed outdoors.

The first non-foamed skin layer 1 provides UV and/or impact resistance, and prevents moisture from being absorbed into the core layer with a honeycomb structure 3. The presence of moisture may result in deterioration of mechanical and electrical performances of the antenna housing.

Compared with the conventional polycarbonate antenna housing, the antenna housing according to the present invention can reduce the signal loss of electromagnetic waves in the 5G band especially at the mmWave frequencies and provide a weight reduction.

## Examples

The concept, specific structure, and technical effects of the present invention will be further described with reference to examples, so that those skilled in the art can fully understand the objects, features, and effects of the present invention. Those skilled in the art can easily understand that the examples herein are only for illustrative purposes, and the scope of the invention is not limited thereto.

## Equipments

Thermoforming machine: Dual unit press machine (Machine model: BL-6170-B) from Bolon precision testing machines Co., Ltd.

### Raw materials

Solid polycarbonate sheet: made from Makrolon® 3107 from Covestro Polymers (China) Co. Ltd, with a thickness of 2.5 mm and the density of 1.2 g/cm$^3$.

Non-foamed extrusion polycarbonate films: Makrofol® LM903 from Covestro Polymers (China) Co., Ltd, with the thickness of 0.175 mm, 0.25 mm, 0.375 mm, 0.5 mm, 0.75 mm and 1 mm, respectively, and a density of 1.2 g/cm$^3$.

Polycarbonate sheets with a honeycomb structure: made with a base resin Makrolon® 3108 from Qingdao Jilida Composite Materials Co., Ltd, having a thicknesses of 1.65 mm, 2.4 mm and 3.0 mm, respectively. The honeycomb structure has a cell thickness of 0.1 mm and has a cell diameter of 3 mm. The density of the sheets is 0.13 g/cm$^3$.

Thermoplastic polyurethane (TPU) hot-melt adhesive film: Platilon® HU2105 from Covestro Polymers (China) Co., Ltd, with a thickness of 0.1 mm and a density of 1.16 g/cm$^3$.

### Measurements

The impact performance of the multilayer composite sheet was tested according to ISO 6603-1: 1985. In particular, the sample was placed on a supporting cylinder and was punched by a hammer which has a hemispherical strike tip with a diameter of 13mm, with a load of 500 g from the height of 1.3 m at room temperature (23 °C) based on the falling dart impact method. Then the surface of the punched sample is observed. If no breaking is observed, then 'No break' is recorded; if cracking happens then 'Cracking' is record; if the part has been punched through and breaking happens then 'Break' is recorded.

The average density of the multilayer composite sheet was calculated based on the following formula.

$$Average\ Density = \frac{total\ weight}{length \times width \times total\ thickness}$$

or

$$Average\ Density = \frac{t_1 . \rho_1 + t_2 . \rho_2 + \cdots + t_n . \rho_n}{t_1 + t_2 + \cdots + t_n}$$

*Wherein,*

*$t_1$, $t_2$, $t_n$ represent thickness of the 1st layer, the 2nd layer, and the nth layer, respectively,*
*$\rho_1$, $\rho_2$, $\rho_n$ represent density of the 1st layer, the 2nd layer, and the nth layer, respectively.*

Dielectric constant Dk and loss factor Df were tested according to ASTM D150 with 16451B Dielectric Test Fixture from Keysight technologies, wherein the Keysight resonant cavity method was used in the frequency range of 1.1 GHz-15.0 GHz, and the Keysight waveguide transmission line method was used in the frequency range of 18.0 GHz-50.0 GHz.

The measured Dk and Df for solid PC sheet, the PC film, the TPU hot-melt adhesive film, and the PC honeycomb sheet, were listed in Table 1. Dk and Df of the PC foamed sheet with the density of 0.12 g/cm$^3$ is also shown in Table 1.

Table 1 Dk/Df and density of solid PC, PC film, TPU film, PC honeycomb sheet, PC foamed sheet

| Description | Density (g/cm$^3$) | Dk | Df |
|---|---|---|---|
| Solid PC Sheet | 1.2 | 2.77 | 0.0058 |
| PC Film | 1.2 | 2.77 | 0.0058 |
| TPU Hotmelt Adhesive Film | 1.16 | 2.89 | 0.0367 |
| PC Honeycomb Sheet | 0.13 | 1.13 | 0.0011 |
| PC Foamed Sheet | 0.12 | 1.3 | 0.02 |

The simulation process was based on a version of CTS STUDIO SUITE 2014 (CST Microwave Studio) authorized by Southeast University. In the simulation process, the actual material characteristics are used, for example, copper was used for metal feed structure. The measured Dk and Df of PC film, PC honeycomb sheet, the TPU hotmelt adhesive film and also the PC foamed sheet were used as the input data for the antenna housing, and the analog output data is reflection data and transmittance data, and corresponding S11 and S21. S11 is one of the S parameters, which indicates the return loss characteristics. This parameter indicates the transmission efficiency of the antenna. The higher the value, the greater the energy reflected by the antenna itself, and the worse the transmission efficiency of the antenna. S21 is the forward transmission coefficient, that is, the gain, the higher the value, the better the transmission efficiency of the antenna.

**Preparation of polycarbonate composite sheets**

In the following examples, the signal transmission performance of solid polycarbonate sheets, asymmetrical 3-layer polycarbonate composite sheets, symmetrical 5-layer polycarbonate composite sheets based on PC film, TPU hotmelt adhesive film and PC honeycomb sheet, as well as a symmetrical 3-layer polycarbonate composite sheet with a thickness of 6.16 mm based on PC film, PC foamed sheet and PC film were prepared and characterized.

Preparation of asymmetrical 3-layer polycarbonate composite sheets:

An asymmetrical 3-layer polycarbonate composite sheet can be obtained as follows:

a) Preheat the mold to 105 °C and maintain the temperature for at least 30 minutes;
b) Cut one piece of the non-foamed PC film with a desired thickness into a desired size;
c) Cut one piece of the TPU adhesive film with a thickness of 0.1 mm into the same size as in step b;
d) Cut one piece of the PC honeycomb sheet with a desired thickness with the same size as in step b;
e) Stack the materials in the order of PC film- TPU hotmelt adhesive film-PC honeycomb sheet and place the stacked materials in the mold;
f) Close the mold and and apply a pressure of 1MPa for 1 minute;
g) Cool the mold down for 1.5 minutes; and
h) Open the mold to obtain the asymmetrical 3-layer polycarbonate composite sheet.

Preparation of symmetrical 3-layer polycarbonate composites:

A symmetrical 3-layer polycarbonate composite sheet can be obtained as follows:

a) Preheat the mold to 175°C and maintain the temperature for at least 30 minutes;
b) Cut two pieces of the non-foamed PC film with a desired thickness into a desired size;
c) Cut one piece of the PC foamed sheet with a desired thickness into the same size as in step b;
d) Stack the materials in the order of PC film - PC foamed sheet - PC film and place the stacked materials in the mold;
e) Close the mold and apply a pressure of 1 MPa for 1 minute;
f) Cool the mold down for 1 minute; and
g) Open the mold to obtain the symmetrical 3-layer polycarbonate composite sheet.

Preparation of symmetrical 5-layer polycarbonate composite sheets:

A symmetrical 5-layer polycarbonate composite sheet can be obtained as follows:

a) Preheat the mold to 105 °C and maintain the temperature for at least 30 minutes;
b) Cut two pieces of the non-foamed PC film with a desired thickness into a desired size;
c) Cut two pieces of the TPU hotmelt adhesive film with a thickness of 0.1 mm into the same size as in step b;
d) Cut one piece of the PC sheet with honeycomb structure with a desired thickness and the same size as in step b;
e) Stack the materials in the order of PC film-TPU hotmelt adhesive film-PC honeycomb sheet-TPU hotmelt adhesive film-PC film in the order and place the stacked materials in the mold;
f) Close the mold and and apply a pressure of 1 MPa for 1 minute;
g) Cool the mold down for 1.5 minutes; and
h) Open the mold to obtain the symmetrical 5-layer polycarbonate composite sheet.

**Comparative examples 1-4**

In comparative examples (CE) 1-4, solid PC sheets with different thickness and the same density of 1.2 g/cm$^3$

were simulated at the selected 5G frequency of 28 GHz with 0 degree incident angle. Selected sheet thickness and corresponding signal transmission, reflection data, and S21 and S11 data were listed in Table 2.

Table 2

| | Total thickness (mm) | Average density (g/cm$^3$) | Frequency (GHz) | Transmittance | S21 (dB) | Reflection | S11 (dB) |
|---|---|---|---|---|---|---|---|
| CE1 | 2.5 | 1.2 | 28 | 88.30% | -0.54 | 10.40% | -9.83 |
| CE2 | 3.95 | 1.2 | 28 | 87.08% | -0.60 | 10.56% | -9.77 |
| CE3 | 5.7 | 1.2 | 28 | 86.32% | -0.64 | 10.62% | -9.74 |
| CE4 | 7.2 | 1.2 | 28 | 84.86% | -0.71 | 11.02% | -9.58 |

It can be seen from Table 2 that the solid PC sheets of comparative examples 1-4 do not have good signal transmission performance at the selected 5G frequency of 28 GHz as demonstrated by signal transmittance <96% and S11>-20 dB.

**Comparative examples 5 and 6**

In comparative examples (CE) 5 and 6, asymmetrical 3-layer PC composite sheets with one non-foamed skin layer, one adhesive layer and one layer with honeycomb structure were simulated at the selected 5G frequency of 28 GHz with 0 degree incident angle. The asymmetrical 3-layer PC composite sheet of comparative example 5 comprises a non-foamed layer of 0.75 mm with a density of 1.2g/cm$^3$, an adhesive film layer of 0.1mm with a density of 1.16g/cm$^3$ and a layer with honeycomb structure of 3.1 mm with a density of 0.13g/cm$^3$. The asymmetrical 3-layer PC composite sheet of comparative example 6 comprises a non-foamed layer of 1 mm with a density of 1.2g/cm$^3$, an adhesive film layer of 0.1mm with a density of 1.16g/cm$^3$ and a layer with honeycomb structure of 1 mm with a density of 0.13g/cm$^3$. Corresponding signal transmission, reflection data, and S21 and S11 data were listed in Table 3.

Table 3

| | Total thickness (mm) | Average density (g/cm³) | R* | Layer Thickness (mm) L1/L2/L3/L4/L5 | Frequency (GHz) | Transmittance | S21 (dB) | Reflection | S11 (dB) |
|---|---|---|---|---|---|---|---|---|---|
| CE5 | 3.95 | 0.359 | 0.785 | 0.75/0.1/3.1 | 28 | 88.71% | -0.52 | 10.10% | -9.96 |
| CE6 | 4 | 0.423 | 0.725 | 1/0.1/2.9 | 28 | 84.81% | -0.72 | 13.96% | -8.55 |
| R*: the thickness ratio of the core layer to the multilayer composite sheet | | | | | | | | | |

It can be seen from Table 3 that the asymmetrical 3-layer composite sheets of comparative examples 5 and 6 do not have good signal transmission performance at the selected 5G frequency of 28 GHz as demonstrated by signal transmittance <96% and S1 1>-20dB.

## Comparative example 7

In comparative example (CE) 7, a symmetrical 3-layer PC composite sheet with two non-foamed skin layers and one PC core layer was simulated at the selected 5G frequencies of 24, 28, 35 and 40 GHz with 0 degree incident angle. The symmetrical 3-layer PC composite sheet of comparative example 7 comprises two non-foamed skin layer of 0.08 mm (with a density of 1.2 g/cm$^3$) and a core layer of 6 mm (with a density of 0.12 g/cm$^3$, Dk of 1.3, and Df of 0.02). Corresponding signal transmission, reflection data, and S21 and S11 data were listed in Table 4.

Table 4

| | Total thickness (mm) | Average density (g/cm$^3$) | R* | Layer Thickness (mm) L1/L2/L3 | Frequency (GHz) | Transmittance | S21 (dB) | Reflection | S11 (dB) |
|---|---|---|---|---|---|---|---|---|---|
| CE7 | 6.16 | 0.148 | 0.974 | 0.08/6/0.08 | 24 | 92.18% | -0.35 | 1.01% | -19.93 |
| | | | | | 28 | 90.24% | -0.45 | 2.00% | -16.99 |
| | | | | | 35 | 89.84% | -0.47 | 0.65% | -21.88 |
| | | | | | 40 | 88.88% | -0.51 | 0.13% | -28.81 |
| R*: the thickness ratio of the core layer to the multilayer composite sheet | | | | | | | | | |

It can be seen from Table 4 that the symmetrical 3-layer composite sheets of comparative example 7 do not have good signal transmission performance at the selected 5G frequencies of 24, 28, 35, and 40 GHz as demonstrated by signal transmittance <96% and/or S11>-20dB.

**Comparative examples 8-23 and invention examples 1-21**

In comparative examples (CE) 8-23 and invention examples (IE) 1-21, symmetrical 5-layer PC composite sheets with two non-foamed skin layers, two adhesive layers and one core layer with a honeycomb structure were simulated at the selected 5G frequencies of 28, 35, or 49 GHz with 0 degree incident angle. Selected sheet thickness and corresponding signal transmission, reflection data, and S21 and S11 data were listed in Table 5.

Table 5

| | Total thickness (mm) | Average density (g/cm³) | R* | Layer thickness (mm) L1/L2/L3/L4/L5 | Frequency (GHz) | Transmittance | S21 (dB) | Reflection | S11 (dB) |
|---|---|---|---|---|---|---|---|---|---|
| CE8 | 1.35 | 0.560 | 0.593 | 0.175/0.1/0.8/0.1/0.175 | 28 | 93.59% | -0.288 | 5.10% | -12.92 |
| CE9 | 1.5 | 0.624 | 0.533 | 0.25/0.1/0.8/0.1/0.25 | 28 | 92.16% | -0.354 | 6.50% | -11.87 |
| IE1 | 1.6 | 0.593 | 0.563 | 0.25/0.1/0.9/0.1/0.25 | 49 | 97.36% | -0.116 | 0.026% | -35.80 |
| IE2 | 1.6 | 0.493 | 0.656 | 0.175/0.1/1.05/0.1/0.175 | 49 | 97.43% | -0.113 | 0.016% | -37.98 |
| IE3 | 1.8 | 0.453 | 0.694 | 0.175/0.1/1.25/0.1/0.175 | 49 | 96.40% | -0.159 | 0.80% | -20.98 |
| IE4 | 2.3 | 0.461 | 0.761 | 0.25/0.1/1.75/0.1/0.25 | 28 | 97.58% | -0.1064 | 0.0085% | -20.72 |
| IE5 | 2.75 | 0.407 | 0.800 | 0.25/0.1/2.2/0.1/0.25 | 28 | 98.24% | -0.077 | 0.0018% | -47.53 |
| IE6 | 2.85 | 0.578 | 0.579 | 0.5/0.1/1.65/0.1/0.5 | 28 | 98.00% | -0.087 | 0.00069% | -51.59 |
| IE7 | 2.85 | 0.484 | 0.667 | 0.375/0.1/1.9/0.1/0.375 | 28 | 98.12% | -0.082 | 0.00039% | -54.05 |
| IE8 | 2.9 | 0.754 | 0.414 | 0.75/0.1/1.2/0.1/0.75 | 28 | 97.85% | -0.094 | 0.0017% | -47.82 |
| IE9 | 2.95 | 0.327 | 0.814 | 0.175/0.1/2.4/0.1/0.175 | 28 | 98.30% | -0.073 | 0.0010% | -49.82 |
| IE10 | 3 | 0.912 | 0.267 | 1/0.1/0.8/0.1/1 | 28 | 97.74% | -0.099 | 0.012% | -39.11 |
| CE10 | 3.85 | 0.461 | 0.688 | 0.5/0.1/2.65/0.1/0.5 | 28 | 87.49% | -0.580 | 10.11% | -9.95 |
| CE11 | 4.15 | 0.373 | 0.771 | 0.375/0.1/3.2/0.1/0.375 | 28 | 87.73% | -0.568 | 10.05% | -9.98 |
| CE12 | 5 | 0.278 | 0.860 | 0.25/0.1/4.3/0.1/0.25 | 28 | 88.00% | -0.555 | 10.12% | -9.95 |
| CE13 | 5.45 | 0.237 | 0.899 | 0.175/0.1/4.9/0.1/0.175 | 28 | 91.15% | -0.402 | 7.13% | -11.47 |
| CE14 | 5.80 | 0.258 | 0.879 | 0.25/0.1/5.1/0.1/0.25 | 28 | 88.15% | -0.548 | 10.15% | -9.94 |
| CE15 | 6.55 | 0.284 | 0.855 | 0.375/0.1/5.6/0.1/0.375 | 28 | 87.85% | -0.563 | 10.46% | -9.80 |
| CE16 | 6.85 | 0.316 | 0.825 | 0.5/0.1/5.65/0.1/0.5 | 28 | 87.61% | -0.574 | 10.64% | -9.73 |
| CE17 | 7.2 | 0.382 | 0.764 | 0.75/0.1/5.5/0.1/0.75 | 28 | 87.51% | -0.580 | 10.60% | -9.75 |
| CE18 | 7.4 | 0.447 | 0.703 | 1/0.1/5.2/0.1/1 | 28 | 86.61% | -0.624 | 11.38% | -9.44 |
| IE 11 | 7.9 | 0.292 | 0.848 | 0.5/0.1/6.7/0.1/0.5 | 28 | 97.61% | -0.105 | 0.0039% | -44.09 |
| IE12 | 7.9 | 0.258 | 0.880 | 0.375/0.1/6.95/0.1/0.375 | 28 | 97.74% | -0.099 | 0.0022% | -46.62 |
| IE13 | 7.9 | 0.224 | 0.911 | 0.25/0.1/7.2/0.1/0.25 | 28 | 97.90% | -0.092 | 0.0028% | -45.59 |

(continued)

| | Total thickness (mm) | Average density (g/cm³) | R* | Layer thickness (mm) L1/L2/L3/L4/L5 | Frequency (GHz) | Transmittance | S21 (dB) | Reflection | S11 (dB) |
|---|---|---|---|---|---|---|---|---|---|
| IE14 | 7.95 | 0.358 | 0.786 | 0.75/0.1/6.25/0.1/0.75 | 28 | 97.41% | -0.114 | 0.0084% | -40.75 |
| IE15 | 7.95 | 0.203 | 0.931 | 0.175/0.1/7.4/0.1/0.175 | 28 | 99.10% | -0.088 | 0.0022% | -46.48 |
| IE16 | 8 | 0.423 | 0.725 | 1/0.1/5.8/0.1/1 | 28 | 97.31% | -0.118 | 0.018% | -37.55 |
| IE17 | 8.55 | 0.198 | 0.936 | 0.175/0.1/8/0.1/0.175 | 28 | 96.90% | -0.137 | 0.94% | -20.29 |
| CE19 | 8.65 | 0.339 | 0.803 | 0.75/0.1/6.95/0.1/0.75 | 28 | 86.89% | -0.610 | 10.12% | -9.95 |
| CE20 | 8.9 | 0.273 | 0.865 | 0.5/0.1/7.7/0.1/0.5 | 28 | 87.02% | -0.604 | 10.23% | -9.90 |
| CE21 | 9.2 | 0.240 | 0.897 | 0.375/0.1/8.25/0.1/0.375 | 28 | 87.32% | -0.589 | 10.13% | -9.94 |
| CE22 | 10.05 | 0.204 | 0.930 | 0.25/0.1/9.35/0.1/0.25 | 28 | 87.69% | -0.571 | 10.11% | -9.95 |
| CE23 | 10.5 | 0.185 | 0.948 | 0.175/0.1/9.95/0.1/0.175 | 28 | 90.85% | -0.417 | 7.11% | -11.48 |
| IE18 | 10.35 | 0.253 | 0.884 | 0.5/0.19.15/0.1/0.5 | 35 | 96.90% | -0.137 | 0.0036% | -44.40 |
| IE19 | 10.35 | 0.186 | 0.947 | 0.175/0.1/9.8/0.1/0.175 | 35 | 97.32% | -0.118 | 0.0038% | -44.23 |
| IE20 | 10.45 | 0.303 | 0.837 | 0.75/0.1/8.75/0.1/0.75 | 35 | 96.69% | -0.146 | 0.012% | -39.23 |
| IE21 | 10.55 | 0.352 | 0.791 | 1/0.1/8.35/0.1/1 | 35 | 96.59% | -0.150 | 0.0038% | -44.19 |

R*: the thickness ratio of the core layer to the multilayer composite sheet

It can be seen from Table 5 that the symmetrical 5-layer composite sheets of invention examples 1-21 have good signal transmission performance at the selected 5G frequencies of 28, 35, and 49 GHz as demonstrated by signal transmittance >96% and S11<-20dB.

It can also be seen that the symmetrical 5-layer composite sheets of comparative examples 8-11 do not have good signal transmission performance at the selected 5G frequency of 28 GHz as demonstrated by signal transmittance <96% and/or S11>-20dB.

It can be seen that the symmetrical 5-layer composite sheet with a honeycomb core layer with a total thickness in the range of 1.6-10.55 mm, the average density in the range of 0.186-0.912 g/cm$^3$, and the thickness ratio of the core layer to the composite sheet in a range of 0.267-0.947, offers better signal transmission at mmWave frequency.

## Characterization of mechanical property

The falling dart impact test was conducted at room temperature (23 °C) on a solid polycarbonate sheet of comparative example 1 and symmetrical 5-layer composite sheets with PC honeycomb core of invention examples 6 and 9, and a polycarbonate sheet with honeycomb structure and the results were listed in Table 6.

Table 6

| | Description | Total thickness (mm) | Average Density (g/cm$^3$) | Layer Thickness (mm) L1/L2/L3/L4/L5 | R* | Falling dart impact test |
|---|---|---|---|---|---|---|
| CE1 | Solid PC sheet | 2.5 | 1.2 | / | 1 | No break |
| | PC honeycomb sheet | 3 | 0.13 | / | 1 | Break |
| IE6 | Symmetrical 5-layer with PC honeycomb core layer | 2.85 | 0.578 | 0.5/0.1/1.65/0.1/0.5 | 0.579 | No break |
| IE9 | Symmetrical 5-layer with PC honeycomb core layer | 2.95 | 0.327 | 0.175/0.1/2.4/0.1/0.175 | 0.814 | No break |
| R*: the thickness ratio of the core layer to the multilayer composite sheet | | | | | | |

It can be seen that, as compared to the solid PC sheet of CE1, IE6 and IE9 have reduced average density; as compared to the polycarbonate sheet with a honeycomb structure, IE6 and IE9 have better mechanical performance. The multilayer composite sheets of IE6 and IE9 can pass the falling dart impact test with a height of 1.3 m and a load of 500 g at room temperature (23 °C), while the polycarbonate sheet with a honeycomb structure failed the test.

## Claims

1. A multilayer composite sheet for an antenna housing, comprising, in order:

   a first non-foamed skin layer (1);
   a first adhesive layer (2);
   a core layer with a honeycomb structure (3);
   a second adhesive layer (4); and
   a second non-foamed skin layer (5);
   wherein,
   the first and second non-foamed skin layers (1, 5) are made from a first polycarbonate composition comprising polycarbonate and an optional component selected from impact modifiers, flame retardants, UV absorbers, and fillers,
   the core layer (3) is made from a second polycarbonate composition comprising polycarbonate and an optional component selected from impact modifiers and flame retardants,
   the core layer (3) has a thickness in a range of 0.8-10 mm, each of the first and second non-foamed skin layers (1, 5) has a thickness in a range of 0.1-1.0 mm, the total thickness of the multi-layer polycarbonate composite sheet is in a range of 1.6-11 mm, the thickness ratio of the core layer (3) to the multi-layer polycarbonate composite sheet is in a range of 0.2-0.95,

the density of the core layer (4) is in the range of 0.1-0.5 g/cm$^3$, the average density of the multilayer polycarbonate composite sheet is in the range of 0.18-0.95 g/cm$^3$,

the multilayer composite sheet has signal transmittance of more than 96% and S11 of less than - 20dB.

2. The multilayer composite sheet according to claim 1, wherein the thickness ratio of the core layer (3) to the multilayer composite sheet is in a range of 0.25-0.95, preferably 0.4-0.95.

3. The multilayer composite sheet according to claim 1 or 2, wherein the core layer (3) has a thickness of 0.8-10 mm and a density of 0.13-0.5 g/cm$^3$.

4. The multilayer composite sheet according to any of claims 1-3, wherein the first and second adhesive layers (2, 4), independently from each other, are formed by two-component cyanoacrylate/epoxy hybrid adhesive, two-component acrylic adhesive, two-component polyurethane adhesive, reactive polyurethane adhesive, or hot-melt thermoplastic polyurethane adhesive.

5. The multilayer composite sheet according to any of claims 1-4, wherein the multilayer composite sheet is symmetrical in structure and has a total thickness in the range of 1.6-10.55 mm and the average density in the range of 0.186-0.912 g/cm$^3$, and the thickness ratio of the core layer (3) to the multi-layer composite sheet is in a range of 0.267-0.947.

6. The multilayer composite sheet according to any of claims 1-5, wherein the multilayer composite sheet has a S11 of less than -30 dB, preferable less than -40 dB.

7. A method for preparing the polycarbonate composite article according to any of claims 1 to 6, comprising by thermoforming or adhesive bonding.

8. Use of the polycarbonate composite article according to any of claims 1 to 6 as an antenna housing.

9. An antenna housing comprising the multilayer composite sheet according to any of claims 1 to 6.


**Patentansprüche**

1. Mehrschichtige Verbundstoffbahn für ein Antennengehäuse, umfassend der Reihenfolge nach:

eine erste nichtgeschäumte Hautschicht (1);
eine erste Klebstoffschicht (2);
eine Kernschicht mit einer Wabenstruktur (3);
eine zweite Klebstoffschicht (4); and
eine zweite nichtgeschäumte Hautschicht (5);
wobei
die erste und die zweite nichtgeschäumte Hautschicht (1, 5) aus einer ersten Polycarbonatzusammensetzung hergestellt sind, die Polycarbonat und eine optionale Komponente ausgewählt aus Schlägzähmodifikatoren, Flammhemmern, UV-Absorbern und Füllstoffen umfasst,
die Kernschicht (3) aus einer zweiten Polycarbonatzusammensetzung hergestellt ist, die Polycarbonat und eine optionale Komponente ausgewählt aus Schlagzähmodifikatoren und Flammhemmern umfasst,
die Kernschicht (3) eine Dicke in einem Bereich von 0,8-10 mm aufweist, jede von der ersten und der zweiten nichtgeschäumten Hautschicht (1, 5) eine Dicke in einem Bereich von 0,1-1,0 mm aufweist, die Gesamtdicke der mehrschichtigen Polycarbonat-Verbundstoffbahn in einem Bereich von 1,6-11 mm liegt, das Dickenverhältnis der Kernschicht (3) zu der mehrschichtigen Polycarbonat-Verbundstoffbahn in einem Bereich von 0,2-0,95 liegt,
die Dichte der Kernschicht (4) in dem Bereich von 0,1-0,5 g/cm$^3$ liegt, die mittlere Dichte der mehrschichtigen Polycarbonat-Verbundstoffbahn in dem Bereich von 0,18-0,95 g/cm$^3$ liegt,
die mehrschichtige Verbundstoffbahn eine Signaldurchlässigkeit von mehr als 96 % und S11 von kleiner als -20 dB aufweist.

2. Mehrschichtige Verbundstoffbahn gemäß Anspruch 1, wobei das Dickenverhältnis der Kernschicht (3) zu der mehrschichtigen Verbundstoffbahn in einem Bereich von 0,25-0,95, vorzugsweise 0,4-0,95, liegt.

**3.** Mehrschichtige Verbundstoffbahn gemäß Anspruch 1 oder 2, wobei die Kernschicht (3) eine Dicke von 0,8-10 mm und eine Dichte von 0,13-0,5 g/cm$^3$ aufweist.

**4.** Mehrschichtige Verbundstoffbahn gemäß einem der Ansprüche 1-3, wobei die erste und die zweite Klebstoffschicht (2, 4) unabhängig voneinander aus Zweikomponenten-Cyanacrylat/Epoxy-Hybridklebstoff, Zweikomponenten-Acrylklebstoff, Zweikomponenten-Polyurethanklebstoff, reaktivem Polyurethanklebstoff oder thermoplastischem Heißschmelz-Polyurethanklebstoff gebildet sind.

**5.** Mehrschichtige Verbundstoffbahn gemäß einem der Ansprüche 1-4, wobei die mehrschichtige Verbundstoffbahn in der Struktur symmetrisch ist und eine Gesamtdicke in dem Bereich von 1,6-10,55 mm und eine mittlere Dichte in dem Bereich von 0,186-0,912 g/cm$^3$ aufweist, wobei das Dickenverhältnis der Kernschicht (3) zu der mehrschichtigen Verbundstoffbahn in einem Bereich von 0,267-0,947 liegt.

**6.** Mehrschichtige Verbundstoffbahn gemäß einem der Ansprüche 1-5, wobei die mehrschichtige Verbundstoffbahn ein S11 von weniger als -30 dB, vorzugsweise weniger als -40 dB, aufweist.

**7.** Verfahren zur Herstellung des Polycarbonat-Verbundstoffgegenstands gemäß einem der Ansprüche 1 bis 6, umfassend Warmformen oder Klebstoffbinden.

**8.** Verwendung des Polycarbonat-Verbundstoffgegenstands gemäß einem der Ansprüche 1 bis 6 als Antennengehäuse.

**9.** Antennengehäuse, umfassend die mehrschichtige Verbundstoffbahn gemäß einem der Ansprüche 1 bis 6.

## Revendications

**1.** Feuille composite multicouche pour un boîtier d'antenne, comprenant, dans l'ordre :

une première couche de peau non moussée (1) ;
une première couche d'adhésif (2) ;
une couche centrale dotée d'une structure en nid d'abeilles (3) ;
une deuxième couche d'adhésif (4) ; et
une deuxième couche de peau non moussée (5) ;
dans laquelle,
la première et la deuxième couche de peau non moussée (1, 5) sont fabriquées à partir d'une première composition de polycarbonate comprenant un polycarbonate et un composant éventuel sélectionné parmi les modificateurs de résistance aux chocs, les agents ignifuges, les absorbeurs d'UV et les charges,
la couche centrale (3) est fabriquée à partir d'une deuxième composition de polycarbonate comprenant un polycarbonate et un composant éventuel sélectionné parmi les modificateurs de résistance aux chocs et les agents ignifuges,
la couche centrale (3) a une épaisseur dans une plage de 0,8 à 10 mm, chacune des première et deuxième couches de peau non moussées (1, 5) a une épaisseur dans une plage de 0,1 à 1,0 mm, l'épaisseur totale de la feuille composite de polycarbonate multicouche est dans une plage de 1,6 à 11 mm, le rapport d'épaisseurs de la couche centrale (3) sur la feuille composite de polycarbonate multicouche est dans une plage de 0,2 à 0,95, la densité de la couche centrale (4) est dans la plage de 0,1 à 0,5 g/cm$^3$, la densité moyenne de la feuille composite de polycarbonate multicouche est dans la plage de 0,18 à 0,95 g/cm$^3$,
la feuille composite multicouche a une transmittance de signal de plus de 96 % et S11 de moins de -20 dB.

**2.** Feuille composite multicouche selon la revendication 1, dans laquelle le rapport d'épaisseurs de la couche centrale (3) sur la feuille composite multicouche est dans une plage de 0,25 à 0,95, de préférence 0,4 à 0,95.

**3.** Feuille composite multicouche selon la revendication 1 ou 2, dans laquelle la couche centrale (3) a une épaisseur de 0,8 à 10 mm et une densité de 0,13 à 0,5 g/cm$^3$.

**4.** Feuille composite multicouche selon l'une quelconque des revendications 1-3, dans laquelle la première et la deuxième couche d'adhésif (2, 4), indépendamment l'une de l'autre, sont formées d'un adhésif hybride cyanoacrylate/époxy à deux composants, d'un adhésif acrylique à deux composants, d'un adhésif polyuréthane à deux composants, d'un adhésif de polyuréthane réactif ou d'un adhésif polyuréthane thermoplastique thermofusible.

5. Feuille composite multicouche selon l'une quelconque des revendications 1-4, dans laquelle la feuille composite multicouche est symétrique dans sa structure et a une épaisseur totale dans la plage de 1,6 à 10,55 mm et une densité moyenne dans la plage de 0,186 à 0,912 g/cm$^3$, et le rapport d'épaisseurs de la couche centrale (3) sur la feuille composite multicouche est dans une plage de 0,267 à 0,947.

6. Feuille composite multicouche selon l'une quelconque des revendications 1-5, dans laquelle la feuille composite multicouche a un S11 de moins de -30 dB, de préférence moins de -40 dB.

7. Procédé de préparation de l'article composite en polycarbonate selon l'une quelconque des revendications 1 à 6, comprenant un thermoformage ou un collage adhésif.

8. Utilisation de l'article composite en polycarbonate selon l'une quelconque des revendications 1 à 6 comme boîtier d'antenne.

9. Boîtier d'antenne comprenant la feuille composite multicouche selon l'une quelconque des revendications 1 à 6.

(a)

(b)

**Fig.1**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 6492015 B1
- CN 111421937 A
- WO 2019068004 A1
- CH 714293 A1
- CN 112318950 A
- EP 1308084 A1
- DE 102007011069 A1
- DE 10311063 A1

**Non-patent literature cited in the description**

- **W. SCHOLTAN ; H. LANGE.** *Kolloid, Z. und Z. Polymere,* 1972, vol. 250, 782-1796